# EUROPEAN PATENT SPECIFICATION

(11) **EP 3 630 404 B1**
(45) Date of publication and mention of the grant of the patent: **03.01.2024**
(21) Application number: 18728558.0
(22) Date of filing: 24.05.2018
(51) Int. Cl.: B23K 9/02, B23K 9/025, B23K 9/095, B23K 9/127, B23K 9/235, B23K 37/02

(54) **AN APPARATUS AND A METHOD FOR AUTOMATED SEAM WELDING OF A WORK PIECE COMPRISING A BASE PLATE WITH A PATTERN OF UPSTANDING PROFILES**
VORRICHTUNG UND VERFAHREN ZUM AUTOMATISIERTEN NAHTSCHWEISSEN EINES WERKSTÜCKS, DAS EINE BASISPLATTE MIT EINEM MUSTER VON HOCHSTEHENDEN PROFILEN ENTHÄLT
APPAREIL ET PROCEDE DE SOUDAGE AUTOMATISE DE COUTURE D 'UNE PIECE DE TRAVAIL COMPRENANT UNE PLAQUE DE BASE AYANT UN MOTIF DE PROFILS ELÉVÉ.

(30) Priority: 24.05.2017 DK PA201700318
(43) Date of publication of application: 08.04.2020
(73) Proprietor: INROTECH APS, 5220 Odense SØ (DK)
(72) Inventor: FAUDEL, Rasmus, 5230 Odense M (DK); JORGENSEN, Flemming, 5250 Odense SV (DK)
(74) Representative: Zacco Denmark A/S
(86) International application number: PCT/EP2018/063648
(87) International publication number: WO 2018/215592

(56) References cited:
- EP-A1- 2 711 120
- DE-A1-102007 008 598
- US-A- 5 987 591
- US-A- 5 999 642
- US-B1- 6 261 701

## Description

### Background of the invention

The present invention relates to an apparatus for performing welding operations, in particular for use in the manufacturing of large size welded structures comprising a metal base plate with upstanding metal profiles, with weld seams where the metal base plate and the upstanding metal profiles abut against each other and normally also where the upstanding profiles abut against each other. The general term in the shipbuilding industry for such a large size welded structure is a "panel". Profiles as referred to herein may by way of example be flat plates, bars or bulb-, T- or L-profiles.

The term "weld seam" as used herein may preferably refer to a weld ex-tending along the length, normally the full length, of contact between the metal base plate and the respective upstanding elongated metal profiles and the length of contact between the upstanding profiles, in contrast to spot welds. The term "seam welding" refers to the forming of a weld seam.

Robotic devices have attained widespread use in the manufacturing environment in both assembly processes and work processes. Common types of robotic work processes include robotic welding, cutting, grinding, gluing and the like.

Many large structural operations, such as ship, bridge, building and aircraft construction have repetitive work processes. For such processes it has been found of advantage to use robotic welding equipment involving a gantry moving across a work shop floor and supporting robotic devices with arms with a welding tool; one such example is the PEMA weld system, see http://www.pemamek.com/welding-solutions/shipbuilding-and-offshore/panel-fabrication/automated-and-robotized-panel, which includes a vision system.

US5999642A discloses another known prior art. If

Vision systems are generally based on an optical camera which creates a 2D graphical picture or a number of pictures which are then merged into one global picture. The aforementioned PEMA weld system creates a picture of a work piece comprising a base plate spot welded to upstanding profiles which are to be seam welded to the base plate using robotic arms with welding tools. Line drawings are in this case placed upon the picture by an operator, to indicate where seam welding is to be performed. The PEMA weld system may be characterised as a semiautomatic solution as it still requires input from an experienced operator in terms of selecting the joints to be seam welded; it is so to say an advanced off-line programming system.

### Summary of the invention

The present invention seeks to provide a more efficient and less labour demanding apparatus and method for automated seam welding of a work piece comprising a base plate with a pattern of upstanding profiles, using robotic devices with a welding tool. An apparatus and a method of implementing the invention is defined in the independent claims. Advantageous embodiments of the invention are defined in the dependent claims.

Applicant's apparatus is generally based on 3D scanning technology, such as involving one or more overhead laser scanners, performing in a first procedural step a global scanning of the work piece, such as by a laser beam or line being moved relative to the work piece, to create a global 3D topographical image of the work piece, which image may be based on triangulation. A point cloud may then be created, where 3D coordinates are attached to each point of the point cloud.

With the method of the invention the collected data representing the global 3D topography of the work piece is subsequently processed using a computer device to identify the type of the individual upstanding profiles. This identification may be based on derived data representing the width or thickness of the individual profiles, such as on a profile specific width of any elongated upper ribs or flanges that are part of the individual profiles and that is determined from the global 3D topography data. Derived data representing the height, measured from the base plate, of the individual profiles, also determined from the global 3D topography data, may additionally assist in the identification of the individual profiles. The profile identification allows for retrieval from a database of further information relating to seam welds to be subsequently formed.

It is noted that the aforementioned ribs or flanges, that are often there for profiles used in the manufacturing of large size welded structures, often prevent any direct determination based on the global 3D topography data of the position of the elongated contact lines, also referred to herein as "seam lines", between the base plate and the profiles, which contact lines extend below the ribs or flanges and, thus, are hidden from the overhead scanners.

With the present invention the aforementioned profile identification is carried out by electronically referring to the database which contains geometrical information about the profiles used for the specific work piece. This database, or another database, preferably also contains pre-stored information about welding parameters, such as required seam weld length and welding leg length related to the connection between the base plate and each of the identified individual profiles. Data representing an approximated position, relative to some reference point, of the aforementioned contact lines between the profiles and the base plate may then also be created. On this basis a sequence of movements for each robotic device is planned using the computer device. The stored information may be a collection of data in a more or less structured form, known as "a catalogue".

The derived information normally does not, however, represent the exact location of the aforementioned contact lines, due to inherent scanner inaccuracies. For a subsequent more precise determination of the position of the contact lines and, hence, of the exact starting and end points of the weld seams to be formed, the robotic device has a distance sensor which may be an optical distance sensor. This distance sensor can be integrated with the welding tool, or non-integrated, then using a tool exchanger.

For this more precise position determination the robotic arm is moved, guided on the basis of the processed data representing the global 3D topography, to positions close to the ends of the identified, individual profiles and close to the approximated position of the aforementioned contact lines, in accordance with the planned sequence of movements. The distance sensor is now used in a second procedural step for determining the aforementioned contact lines or exact position of the profile ends, i.e. where seam welding should start and stop, relative to the base plate or other fix point(s). This position may be determined as a result of indications from the optical distance sensors representing location of a transverse profile, i.e. where one profile intersects another, such as positions relative to the position of the distance sensor. Then, in a third procedural step a welding tool carried by the robotic arm is activated and the robotic arm is moved along the contact line as determined in the second procedural step.

Distance sensors as referred to may be optical sensors of the type manufactured by Leuze Electronic GmbH.

### Brief description of the drawings

Fig. 1 shows an embodiment of an apparatus of the invention in the process of identifying the global 3D topography of a work piece with profiles that have been spot welded to a base plate in a previous step,
Fig. 2 shows the robotic arm of the apparatus of fig. 1 in a subsequent step of identifying the exact position of a contact line between the base plate and a profile,
Fig. 3 shows the welding apparatus mounted to the robotic arm in the process of carrying out a subsequent seam welding procedure,
Figs. 4a, 4b and 4c show a robotic arm head, with distance sensor S a first configuration and in a protected configuration, respectively, and
Figs. 5a and 5b show details of a weld seam.

### Detailed description

The invention will now be explained in more detail below by reference to the aforementioned drawings.

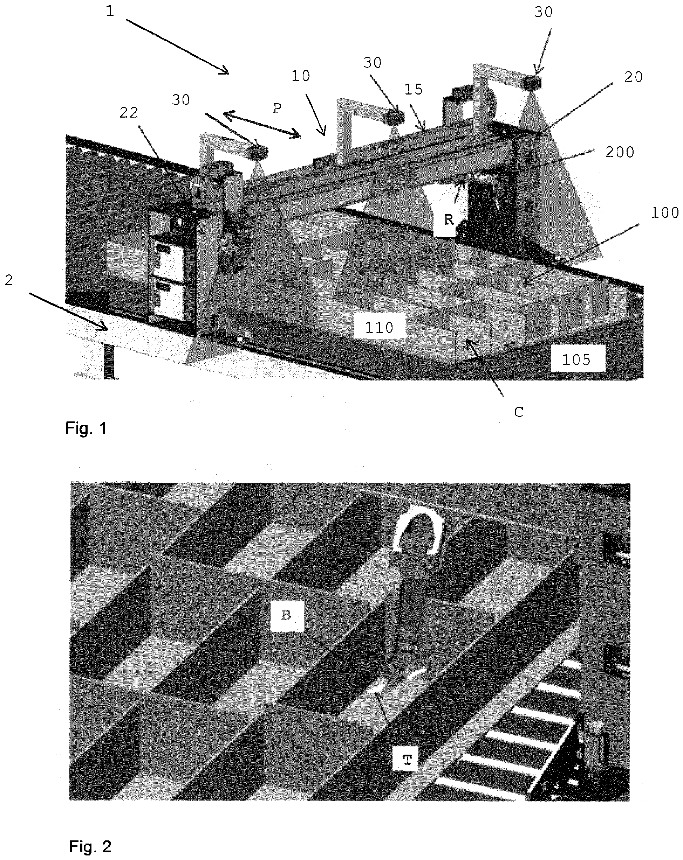

Fig. 1 generally shows a work shop area having a support base in the form of a shop floor 2 and an apparatus 1 including an overhead support in the form of a gantry 10 having two legs 20, 22 connected by a cross-beam 15 and having wheels or other structure allowing the gantry 10 to be moved in directions P across the shop floor 2. On the shop floor 2 is laid out a work piece or structure to be processed and generally designated reference numeral 100. The structure 100 comprises a flat metal base plate 105 covering a portion of the shop floor 2 and having, purely by way of example, dimensions in the order of 14 m by 12 m. To this base plate 105 is temporarily connected, such as by tack-welding/spot-welding, a plurality of upwardly extending profiles 110, exemplified in the figure as narrow flat metal plates, for stiffening the base plate 105. A structure 100 as shown and including such profiles 110 may by way of example be used for making a hull part of a ship or other vessel where the profiles 110 are arranged in a pattern determined by the structural loads on the hull part; in such cases the profiles 110 will very often include a horizontal flange portion extending along the full length thereof, opposite the base plate 105.

Often a structure 100 as shown will have local areas C, such as formed by the shown rectangular cells C, defined by intersecting profiles 110. In order to finalize the structure 100 a welding tool is applied within each cell C to perform a welding by a welding gun of the full length of the seam lines where the individual profiles 110 contact each other, and of the seam lines where the profiles 110 and the base plate 105 contact each other, the base plate 105 and the profiles 110 until that point in time being only temporarily connected by the tack-welding. It goes without saying that the material used for the tack-welding must be compatible with the material used for the final welding.

Shown in fig. 1 are also a plurality of individual scanners 30 mounted onto the cross-beam 15 along the length thereof. The scanners 30 are line scanners, such as LDA (laser distance scanners) or ultra sound scanners, configured for establishing a 2D/3D image of the structure 100, eg. the location of the individual cells C. This image is created by moving the gantry 10 from one end of the structure 100 to the other, i.e. along direction P, while performing the scanning. Due to the resolution of such scanners 30 normally only a relatively rough indication of the position of the cells C relative to the apparatus 1 or any fix point(s) is obtainable, and it may be necessary to process the obtained information in an already known manner to take into account any interference resulting from overlap between the scanned fields, in the figure illustrated as respective shaded triangles having an apex at the individual scanners 30.

In a first step of operating the apparatus 1 the gantry 10 of the apparatus 1 is moved along the structure 100 as described above, to perform a full scanning of the structure 100, thereby obtaining global 3D topographical information about the structure 100. During this procedure robotic arms 200 of respective robotic devices R mounted to the cross-beam 15 and forming part of the apparatus 1 are in a retracted position as shown in fig. 1, allowing free movement of the gantry 10 relative to the structure 100, without blocking the field of scanning of the scanners 30.

As a result of this scanning information is obtained and stored in a computer device (not shown, associated with the apparatus 1), about the position of the cells C; this information determines an approximate position of the generally horizontal and generally vertical seam lines within each cell C, the vertical seams lines extending upward at the corners of the cells C where the profiles 110 intersect each other. This information also allows for an identification of each of the profiles scanned, and, hence, of the dimension of the weld seams to be formed, by electronically referring to a database which contains geometrical information about the profiles 110 used for the specific structure 100.

In a next step the gantry 10 is moved into a position aligned with a first row of cells C parallel with the cross-beam 15, as shown schematically in fig. 2, this position having been determined on the basis of the information stored in the computer device. In this position of the gantry 10 the robotic arms 200, which are supported by the cross-beam 15 so as to be movable along the length thereof, are moved into the shown active position wherein a head H of each robotic arm 200 extends into a cell C, close to the base plate 105. The head H of each robotic arm 200 includes a distance sensor S, such as a laser sensor, and a welding tool WT with any conventional welding gun with a welding torch, welding wire feeder and welding gas supply. Generally, for the present invention the head H may be of the type including a gripper or a mount for exchanging equipment held by the robotic arm, such as to allow the distance sensor S to be held at one time and the welding tool WT to be held at another time, or simultaneously.

Within any given cell C the robotic arm 200 now carries out a second procedural step followed immediately by a third procedural step, each procedural step to be discussed below, before the robotic arm 200 is moved for processing a next cell C in the aforementioned row of cells C, after which the gantry 10 is moved to allow for a similar processing of a next row of cells C in the direction P.

Turning to fig. 2 the robotic arm 200 is shown with its extremity or head H dipped into a cell C to a position close to the support base 2, and with its sensor S on the head H positioned as close as possible to a seam line, the approximate position thereof having been determined by the scanners 30 on the cross-beam 15 during the preceding first procedural step. A start position of the head H for carrying out an ensuing, second procedural step may be selected as one of the corners of the cell C, identified roughly during the preceding, first procedural step.

In the second procedural step now initiated by the computer device the robotic arm 200, guided by information registered by the scanners 30, moves inside the cell C, normally generally approximately along each seam line as approximately identified position wise in the first procedural step, with the sensor S being activated for an exact determination of the position of the start and end points of each seam line within the area of operation of the dipped robotic arm, eg. within the given cell C, possibly including also a determination of the position of the ends of the vertical seam lines, relative to any given fixed point. This sensing is represented schematically in fig. 2 by sensor beam B.

Information obtained hereby about the exact position and exact extension, within the accuracy of the sensor S, of the seam lines and/or ends thereof is stored in the computer device, and this information will allow for a correct and exact subsequent welding. Only the position of some of the seam lines may be determined at this time, and the head H may optionally be moved for a determination by the sensor S of only the position of the points of intersection of the profiles 110, and of any free ends of the profiles 110, as this information may be sufficient to determine where the weld seams are to be applied.

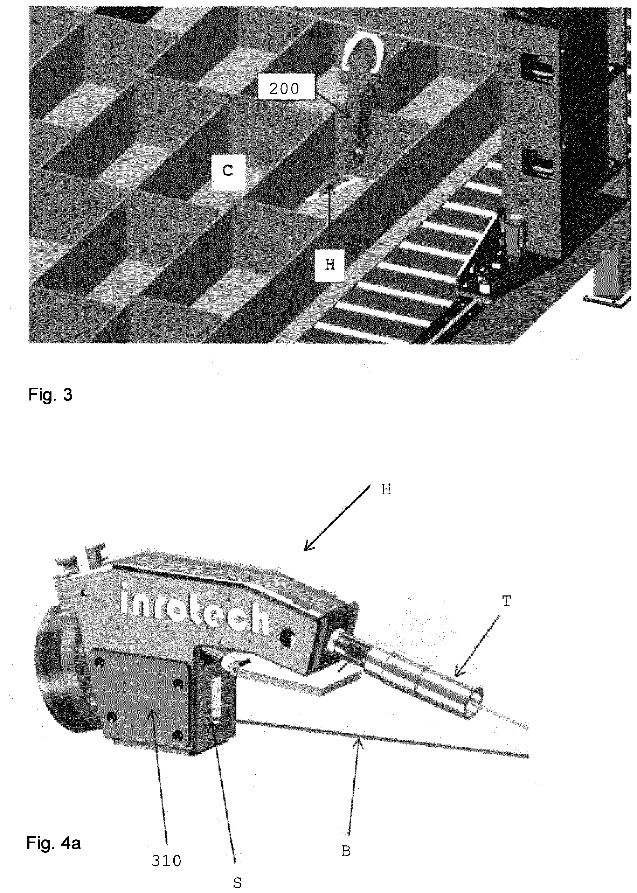

Immediately following the second procedural step a welding using the welding tool and based on the stored information about the exact position of the seam line(s) is carried out as a third procedural step, either for the entirety of the seam line(s) of the cell C or only for some of the seam line(s). This is schematically shown in fig. 3, the welding torch on head H being identified in fig. 2 by reference letter T. Welding may by way of example be started in the position of the head H where registration by the sensor S stopped at the end of the previous procedural step, such as where a seam line comes to an end, the welding following a return path along a just located seam line, or the just located seam line may be retraced where the just located seam line runs along a closed path as in the case of a closed cell C. As the welding is performed the sensor S is preferably in a protected configuration to be discussed further below.

As will be understood from the above the structure 100 to be processed does not need to include closed cells C - in fact, a local area referred to herein may be an areas next to an isolated single profile; however, typically, such a structure will be compartmentalized to some extend along the major direction P whereby a stepwise movement of the gantry 10 relative to the structure 100 will be carried out, with the second and third procedural steps being carried out during each stop, by movement of the robotic device R in the direction of the cross-beam 15. It will also be understood that the robotic arm 200 is raised and lowered as required relative to the structure 100, such as for dipping the robotic arm head H into the cells C or in proximity of seam line(s) to be welded. The actual sensing and welding operations may be performed without raising or lowering the robotic arm 200, the robotic arm head H solely being moved for this purpose.

When a welding operation is finished, i.e. after completion of the aforementioned third procedural step and before initiation of another second procedural step followed by another third procedural step, using the same robotic arm 200, with or without any intermediate movement of the gantry 15 relative to the structure 100, the welding torch T may be automatically cleaned.

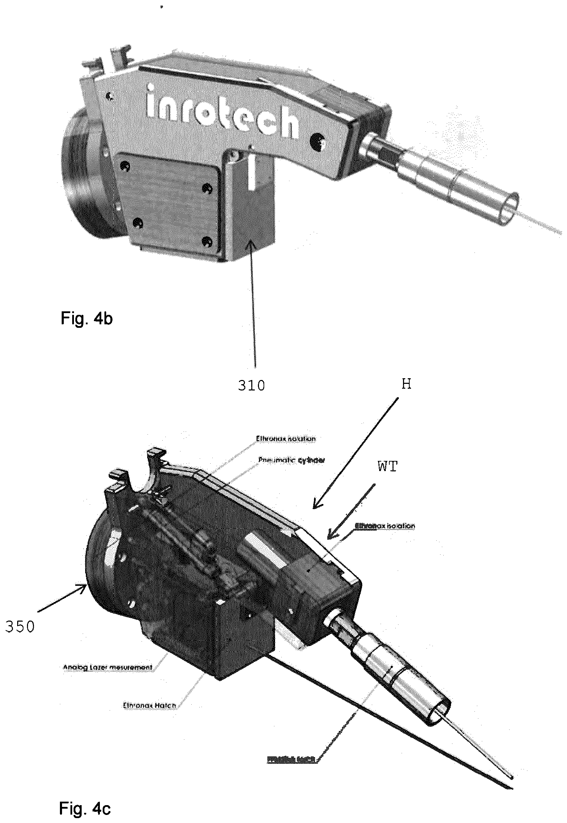

Figs. 4a, 4b and 4c show the robotic arm head H with sensor S and welding tool WT with welding torch T, with the sensor S in a first configuration and in the aforementioned protected configuration, respectively. The sensor S is mounted in a housing 300 provided with a shutter 310 configured to be moved into a position in front of the sensor S, for protection thereof against any damage thereof due to its proximity to the welding torch. Preferably, pressurized fluid is led into the housing 300 via supply 350 to prevent dust settling on the sensor S.

It is noted that for the alternative embodiment where the structure 100 is carried by a conveyor the apparatus 1 may be operated in a way where the conveyor in the first procedural step is advanced until the position of a number, preferably only one, of rows of cells C have been established by the scanners 30, following which the robotic arms 200 are brought into their active position discussed above, for carrying out the aforementioned second and third procedural steps.

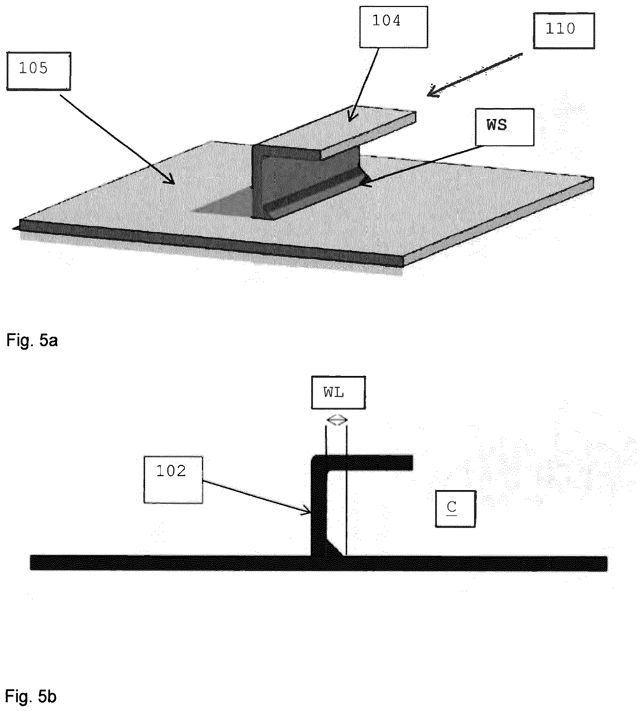

Figs. 5a and 5b show an individual, lone profile 110 including a web 102 integral with an upper horizontal flange 104, with a local area C next to it, into which local area C the head H (not shown) has been dipped in a previous step to identify/detect the location of the two ends of the profile 110 for an exact determination of the position of the start and end points of a weld seam to be formed. The web 102 has a lower edge contacting the base plate 105 along a line, also referred to herein as a seam line, along which line the shown weld seam WS has been formed using welding wire and the welding torch on the head H. The welding leg WL dimension is indicated in fig. 5b, this dimension being an example of weld seam information stored in a database, as previously mentioned herein. The seam line along which the weld seam is formed is hidden below the horizontal flange 104, i.e. it is not visible by the line scanner 30; however, based on the 3D topographical image providing information about the location of the edges of the horizontal flange 104, identified through a reduced distance from the scanner 30 to the work piece100, together with the geometrical information about each profile 110 stored in the database, eg. the width measured between the edges of the flange 104, the location of the seam line may be determined relative to a reference point.

It will be understood that where the term "overhead" is used herein this refers to a position higher than the work piece 100 arranged on the support base/shop floor 2. While above the invention has been discussed in connection with an embodiment where movement of the gantry relative to the structure 100 is by moving the gantry it will be understood that the structure 100 may alternatively by placed on a conveyor moving the structure 100 relative to the gantry 100.

## Claims

1. An apparatus (1) for automated seam welding of a work piece (100) comprising a base plate (105) with a pattern of upstanding profiles (110), said work piece (100) being arranged on a support base (2), said apparatus (1) including:
- an overhead support (10) with at least one robotic device (R), **characterised in**
- at least one overhead laser scanner (30), such as a LIDAR scanner, over said work piece (100), for establishing a global 3D topographical image of said work piece (100) by relative overhead movement (P) across said work piece (100) of said at least one overhead scanner (30),
- - said robotic device (R) including an articulated arm (200) and being configured for assuming active positions wherein a head (H) of said articulated arm (200) is closer to said support base (2) in local areas (C) of said work piece (100),
- - - said head (H) including a distance sensor (S),
- - said robotic device further being configured for carrying a welding tool (WT) with a welding gun with a welding torch (T),
- - - - said distance sensor (S) being positionable in different positions within each of said local areas (C) of said work piece (100) in said active positions,
- - - - - said distance sensor (S) being configured for generating local information about the position of the ends of profiles (110) being within or delimiting said local areas (C) and/or of intersections between profiles (110) being within or delimiting said local areas (C), and
- a computer device for storing data representing said established global 3D topographical image of said work piece (100) and data representing said generated local information about said work piece (100),
- said computer device being configured for identifying each of said profiles (110) by comparing said data representing said global 3D topographical image with information stored in a database and representing geometrical data for each of said profiles (110).

2. The apparatus according to the previous claim, said database containing information about a weld seam to be applied for welding each profile (110) to said base plate (105).

3. The apparatus according to any of the previous claims 1-2, said computer device being configured for activating a welding gun carried by said robotic device, such as by said head (H), for initiating welding in accordance with said generated local information, preferably controlling movement between said ends of said profiles (100) of said head (H), for said seam welding.

4. The apparatus according to any of the previous claims 1-3, said local areas (C) being defined by intersections between said profiles (110).

5. The apparatus according to any of the previous claims 1-4, said overhead support (10) including a gantry structure having a cross-beam (15), optionally supported on said support base (2) by a pair of legs (20, 22), said robotic device (R) being movable along said cross-beam (15), said overhead scanner (30) being mounted onto said cross-beam (15).

6. The apparatus according to any of the previous claims 1-5, said head (H) including a housing (300) for said distance sensor (S), said housing (300) being provided with a shutter (310) configured to be moved into a position in front of the distance sensor (S), for protection thereof against any damage thereof due to its proximity to said welding torch (T).

7. The apparatus according to the previous claim, including a supply (350) for pressurized fluid to said housing (300), for preventing dust settling on said sensor (S).

8. A method for automated seam welding of a work piece (100) comprising a base plate (105) with a pattern of upstanding profiles (110), said work piece (100) being arranged on a support base (2), said apparatus (1) including:
- an overhead support (10) with at least one robotic device (R),
- at least one overhead laser scanner (30), such as a LIDAR scanner,
- - said robotic device (R) including an articulated arm (200) and being configured for assuming active positions wherein a head (H) of said articulated arm (200) is closer to said support base (2),
- - - said head (H) including a distance sensor (S),
- - said robotic device (R) carrying a welding tool (WT) with a welding gun with a welding torch (T),
- - - said sensor (S) being positionable in different positions within local areas (C) of said work piece (100) in said active positions,
- - - said distance sensor (S) being configured for generating local information about seam line positions within said local areas (C), such as information about the position of ends of profiles (110) being within or delimiting said local areas (C) and/or of intersections between profiles (110), and
- a computer device for storing:
- - data representing an established global 3D topographical image of said work piece (100),
- - data representing said generated local information about said work piece (100),
- - information representing geometrical data for each of said profiles (110), and
- - information about a weld seam to be applied for welding each profile (110) to said base plate (105),
**characterised in**
- initiating a relative movement over said work piece (100) of said at least one overhead laser scanner (30) relative to said support base (2),
- establishing said global 3D topographical image of said work piece (100) by said relative movement of said at least one overhead laser scanner (30) relative to said work piece (100),
- identifying each of said profiles (110) by comparing said data representing said global 3D topographical image with said information representing geometrical data for each of said profiles (110),
- positioning said sensor (S) in different positions within each of said local areas (C) of said work piece (100) to generate said local information about seam line positions, and
- initiating welding within said locals areas (C) and moving said welding gun along said seam lines for said seam welding using said stored information about the weld seam to be applied for welding each profile (110) to said base plate (105).

9. The method of claim 8, said information about a weld seam to be applied for welding each profile (110) to said base plate (105) comprising or consisting of information about welding leg (WL) dimension.

## Patentansprüche

1. Vorrichtung (1) zum automatisierten Nahtschweißen eines Werkstücks (100), das eine Basisplatte (105) mit einem Muster von hochstehenden Profilen (110) umfasst, wobei das Werkstück (100) auf einer Trägerbasis (2) angeordnet ist, wobei die Vorrichtung (1) Folgendes beinhaltet:
- einen Überkopfträger (10) mit mindestens einem Robotergerät (R),
durch Folgendes gekennzeichnet
- mindestens einen Überkopflaserscanner (30), zum Beispiel ein LIDAR-Scanner, über dem Werkstück (100), um ein globales topografisches 3D-Bild des Werkstücks (100) durch relative Überkopfbewegung (P) über das Werkstück (100) des mindestens einen Überkopflaserscanners (30) zu ermitteln,
-- wobei das Robotergerät (R), einen Gelenkarm (200) beinhaltet und dazu konfiguriert ist, aktive Positionen einzunehmen, wobei ein Kopf (H) des Gelenkarms (200) näher an der Trägerbasis (2) in lokalen Bereichen (C) des Werkstücks (100) ist,
--- wobei der Kopf (H) einen Abstandssensor (S) beinhaltet,
-- wobei das Robotergerät ferner dazu konfiguriert ist, ein Schweißwerkzeug (WT) mit einer Schweißpistole mit einem Schweißbrenner (T) zu tragen,
---- wobei der Abstandssensor (S) in verschiedenen Positionen innerhalb jedem der lokalen Bereiche (C) des Werkstücks (100) in den aktiven Positionen positionierbar ist,
----- wobei der Abstandssensor (S) dazu konfiguriert ist, lokale Informationen zu der Position von den Enden von Profilen (110), die innerhalb oder abgrenzend der lokalen Bereiche (C) liegen, und/oder von Kreuzungen zwischen Profilen (110), die innerhalb oder abgrenzend der lokalen Bereiche (C) liegen, zu generieren, und
- ein Computergerät zum Speichern von Daten, die das ermittelte globale topografische 3D-Bild des Werkstücks (100) darstellen, und Daten, die die generierten lokalen Informationen zum Werkstück (100) darstellen,
- wobei das Computergerät dazu konfiguriert ist, jedes der Profile (110) durch Vergleichen der Daten, die das globale topografische 3D-Bild darstellen, mit Informationen, die in einer Datenbank gespeichert sind und die geometrischen Daten für jedes der Profile (110) darstellen, zu identifizieren.

2. Vorrichtung nach dem vorstehenden Anspruch, wobei die Datenbank Informationen zu einer Schweißnaht enthält, die zum Schweißen jedes Profils (110) auf die Basisplatte (105) anzuwenden ist.

3. Vorrichtung nach einem der vorstehenden Ansprüche 1-2, wobei das Computergerät dazu konfiguriert ist, eine Schweißpistole zu aktivieren, die von dem Robotergerät getragen wird, zum Beispiel durch den Kopf (H), zum Initiieren von Schweißen in Übereinstimmung mit den generierten lokalen Informationen, bevorzugt zum Steuern von Bewegung des Kopfs (H) zwischen den Enden der Profile (100) zum Nahtschweißen.

4. Vorrichtung nach einem der vorstehenden Ansprüche 1-3, wobei die lokalen Bereiche (C) durch Kreuzungen zwischen den Profilen (110) definiert sind.

5. Vorrichtung nach einem der vorstehenden Ansprüche 1-4, wobei der Überkopfträger (10) eine Brückenstruktur beinhaltet, die einen Querträger (15), optional auf der Trägerbasis (2) durch ein Paar Beine (20, 22) getragen, aufweist, wobei das Robotergerät (R) entlang des Querträgers (15) beweglich ist, wobei der Überkopfscanner (30) auf dem Querträger (15) montiert ist.

6. Vorrichtung nach einem der vorstehenden Ansprüche 1-5, wobei der Kopf (H) ein Gehäuse (300) für den Abstandssensor (S) beinhaltet, wobei das Gehäuse (300) mit einem Blendenverschluss (310) bereitgestellt ist, der dazu konfiguriert ist, in eine Position vor dem Abstandssensor (S) bewegt zu werden, um diesen vor Beschädigung durch seine Nähe zu dem Schweißbrenner (T) zu schützen.

7. Vorrichtung nach dem vorstehenden Anspruch, die eine Versorgung (350) für unter Druck stehendes Fluid an das Gehäuse (300) beinhaltet, um ein Ablagern von Staub auf dem Sensor (S) zu verhindern.

8. Verfahren zum automatisierten Nahtschweißen eines Werkstücks (100), das eine Basisplatte (105) mit einem Muster von hochstehenden Profilen (110) umfasst, wobei das Werkstück (100) auf einer Trägerbasis (2) angeordnet ist, wobei die Vorrichtung (1) Folgendes beinhaltet:
- einen Überkopfträger (10) mit mindestens einem Robotergerät (R),
- mindestens einen Überkopflaserscanner (30), zum Beispiel ein LIDAR-Scanner,
-- wobei das Robotergerät (R) einen Gelenkarm (200) beinhaltet und dazu konfiguriert ist, aktive Positionen einzunehmen, wobei ein Kopf (H) des Gelenkarms (200) näher an der Trägerbasis (2) ist,
--- wobei der Kopf (H) einen Abstandssensor (S) beinhaltet,
-- wobei das Robotergerät (R) ein Schweißwerkzeug (WT) mit einer Schweißpistole mit einem Schweißbrenner (T) trägt,
--- wobei der Abstandssensor (S) in verschiedenen Positionen innerhalb lokaler Bereiche (C) des Werkstücks (100) in den aktiven Positionen positionierbar ist,
--- wobei der Abstandssensor (S) dazu konfiguriert ist, lokale Informationen zu Positionen von Nahtlinien in den lokalen Bereichen (C) zu generieren, zum Beispiel Informationen zu der Position von den Enden von Profilen (110), die innerhalb oder abgrenzend der lokalen Bereiche (C) liegen, und/oder von Kreuzungen zwischen Profilen (110), und
- ein Computergerät zum Speichern von:
-- Daten, die ein ermitteltes globales topografisches 3D-Bild des Werkstücks (100) darstellen,
-- Daten, die die generierten lokalen Informationen zum Werkstück (100) darstellen,
-- Informationen, die die geometrischen Daten für jedes der Profile (110) darstellen, und
-- Informationen zu einer Schweißnaht, die zum Schweißen jedes Profils (110) auf die Basisplatte (105) anzuwenden ist, **dadurch gekennzeichnet, dass**
- eine relative Bewegung über das Werkstück (100) von dem mindestens einen Überkopfscanner (30) relativ zu der Trägerbasis (2) initiiert wird,
- das globale topografische 3D-Bild des Werkstücks (100) durch die relative Bewegung des mindestens einen Überkopflaserscanners (30) relativ zu dem Werkstück (100) ermittelt wird,
- jedes der Profile (110) durch Vergleichen der Daten, die das globale topografische 3D-Bild darstellen, mit den Informationen, die geometrische Daten für jedes der Profile (110) darstellen, identifiziert wird,
- der Sensor (S) in verschiedenen Positionen innerhalb jedem der lokalen Bereiche (C) des Werkstücks (100) positioniert wird, um die lokalen Informationen zu Positionen von Nahtlinien zu generieren,
- Schweißen in den lokalen Bereichen (C) und Bewegen der Schweißpistole entlang der Nahtlinien für das Nahtschweißen durch Verwenden der gespeicherten Informationen zu der Schweißnaht, die zum Schweißen jedes Profils (110) auf die Basisplatte (105) anzuwenden ist, initiiert wird.

9. Verfahren nach Anspruch 8, wobei die Informationen zu einer Schweißnaht, die zum Schweißen jedes Profils (110) auf die Basisplatte (105) anzuwenden ist, Informationen zur Dimension eines Schweißschenkels (WL) umfasst oder daraus besteht.

## Revendications

1. Appareil (1) pour le soudage par joints automatisé d'une pièce de travail (100) comprenant une plaque de base (105) avec un motif de profilés verticaux (110), ladite pièce de travail (100) étant agencée sur une base de support (2), ledit appareil (1) comportant :
- un support aérien (10) avec au moins un dispositif robotique (R), **caractérisé par**
- au moins un scanner laser aérien (30), tel qu'un scanner LIDAR, au-dessus de ladite pièce de travail (100), pour établir une image topographique 3D globale de ladite pièce de travail (100) par un mouvement aérien relatif (P) à travers ladite pièce de travail (100) dudit au moins un scanner aérien (30),
- - ledit dispositif robotique (R) comportant un bras articulé (200) et étant conçu pour prendre des positions actives dans lesquelles une tête (H) dudit bras articulé (200) est plus proche de ladite base de support (2) dans des zones locales (C) de ladite pièce de travail (100),
- - - ladite tête (H) comportant un capteur de distance (S),
- - ledit dispositif robotique étant en outre conçu pour porter un outil de soudage (WT) avec un pistolet de soudage avec une torche de soudage (T),
- - - - ledit capteur de distance (S) pouvant être positionné dans différentes positions à l'intérieur de chacune desdites zones locales (C) de ladite pièce de travail (100) dans lesdites positions actives,
- - - - - ledit capteur de distance (S) étant conçu pour générer des informations locales concernant la position des extrémités de profilés (110) se trouvant à l'intérieur desdites zones locales (C) ou délimitant celles-ci, et/ou d'intersections entre des profilés (110) se trouvant à l'intérieur desdites zones locales (C) ou délimitant celles-ci, et
- un dispositif informatique pour stocker des données représentant ladite image topographique 3D globale établie de ladite pièce de travail (100) et des données représentant lesdites informations locales générées concernant ladite pièce de travail (100),
- ledit dispositif informatique étant conçu pour identifier chacun desdits profilés (110) en comparant lesdites données représentant ladite image topographique 3D globale avec des informations stockées dans une base de données et représentant des données géométriques pour chacun desdits profilés (110).

2. Appareil selon la revendication précédente, ladite base de données contenant des informations concernant un joint de soudure à appliquer pour souder chaque profilé (110) à ladite plaque de base (105).

3. Appareil selon l'une quelconque des revendications précédentes 1 et 2, ledit dispositif informatique étant conçu pour activer un pistolet de soudage porté par ledit dispositif robotique, tel que par ladite tête (H), pour lancer un soudage conformément auxdites informations locales générées, de préférence commander un mouvement entre lesdites extrémités desdits profilés (100) de ladite tête (H), pour ledit soudage par joints.

4. Appareil selon l'une quelconque des revendications précédentes 1 à 3, lesdites zones locales (C) étant définies par des intersections entre lesdits profilés (110).

5. Appareil selon l'une quelconque des revendications précédentes 1 à 4, ledit support aérien (10) comportant une structure de portique présentant une traverse (15), éventuellement supportée sur ladite base de support (2) par une paire de jambes (20, 22), ledit dispositif robotique (R) étant mobile le long de ladite traverse (15), ledit scanner aérien (30) étant monté sur ladite traverse (15).

6. Appareil selon l'une quelconque des revendications précédentes 1 à 5, ladite tête (H) comportant un boîtier (300) pour ledit capteur de distance (S), ledit boîtier (300) étant pourvu d'un obturateur (310) conçu pour être déplacé dans une position devant le capteur de distance (S), pour le protéger contre tout dommage de celui-ci du fait de sa proximité avec ladite torche de soudage (T).

7. Appareil selon la revendication précédente, comportant une alimentation (350) en fluide sous pression audit boîtier (300), pour empêcher de la poussière de se déposer sur ledit capteur (S).

8. Procédé de soudage par joints automatisé d'une pièce de travail (100) comprenant une plaque de base (105) avec un motif de profilés verticaux (110), ladite pièce de travail (100) étant agencée sur une base de support (2), ledit appareil (1) comportant :
- un support aérien (10) avec au moins un dispositif robotique (R),
- au moins un scanner laser aérien (30), tel qu'un scanner LIDAR,
- - ledit dispositif robotique (R) comportant un bras articulé (200) et étant conçu pour prendre des positions actives dans lesquelles une tête (H) dudit bras articulé (200) est plus proche de ladite base de support (2),
- - - ladite tête (H) comportant un capteur de distance (S),
- - ledit dispositif robotique (R) portant un outil de soudage (WT) avec un pistolet de soudage avec une torche de soudage (T),
- - - ledit capteur (S) pouvant être positionné dans différentes positions à l'intérieur de zones locales (C) de ladite pièce de travail (100) dans lesdites positions actives,
- - - ledit capteur de distance (S) étant conçu pour générer des informations locales concernant des positions de lignes de joints à l'intérieur desdites zones locales (C), telles que des informations concernant la position d'extrémités de profilés (110) se trouvant à l'intérieur desdites zones locales (C) ou délimitant celles-ci et/ou d'intersections entre des profilés (110), et
- un dispositif informatique pour stocker :
- - des données représentant une image topographique 3D globale établie de ladite pièce de travail (100),
- - des données représentant lesdites informations locales générées concernant ladite pièce de travail (100),
- - des informations représentant des données géométriques pour chacun desdits profilés (110), et
- - des informations concernant un joint de soudure à appliquer pour souder chaque profilé (110) à ladite plaque de base (105),
**caractérisé par**
- le lancement d'un mouvement relatif par dessus ladite pièce de travail (100) dudit au moins un scanner laser aérien (30) par rapport à ladite base de support (2),
- l'établissement de ladite image topographique 3D globale de ladite pièce de travail (100) par ledit mouvement relatif dudit au moins un scanner laser aérien (30) par rapport à ladite pièce de travail (100),
- l'identification de chacun desdits profilés (110) en comparant lesdites données représentant ladite image topographique 3D globale avec lesdites informations représentant des données géométriques pour chacun desdits profilés (110),
- le positionnement dudit capteur (S) dans différentes positions à l'intérieur de chacune desdites zones locales (C) de ladite pièce de travail (100) pour générer lesdites informations locales concernant des positions de lignes de joints, et
- le lancement d'un soudage à l'intérieur desdites zones locales (C) et le déplacement dudit pistolet de soudage le long desdites lignes de joints pour ledit soudage par joints à l'aide desdites informations stockées concernant le joint de soudure à appliquer pour souder chaque profilé (110) à ladite plaque de base (105).

9. Procédé selon la revendication 8, lesdites informations concernant un joint de soudure à appliquer pour souder chaque profilé (110) à ladite plaque de base (105) comprenant ou consistant en des informations concernant une dimension de jambe de soudage (WL).
